# EUROPEAN PATENT APPLICATION

(11) **EP 1 580 999 A2**
(43) Date of publication of application: **28.09.2005**
(21) Application number: 05004234.0
(22) Date of filing: 25.02.2005
(51) Int. Cl.: H04N 7/15, H04N 7/24

(54) **Network conference system, management server, conference terminal, and information origination authorization management method**

(30) Priority: 25.02.2004 JP 2004050550
(71) Applicant: Pioneer Corporation, Tokyo (JP)
(72) Inventor: Amano, Mitsuyoshi, Tokyo (JP); Nagayama, Hironori, Tokyo (JP); Suginohara, Keiji, Tokyo (JP)
(74) Representative: Skuhra, Udo

(57) **Abstract**

A network conference system with multipoint connection in which a plurality of users (at least two) are allowed to speak simultaneously, a server-client system in which distribution of information can be easily managed in a centralized manner. A management server (100) executes real-time and dynamic management of the information origination authorization (speech authorization, etc.,) for all sites and on the other hand, an information origination control section (221) of each conference terminal appropriately controls transmission of information from the conference terminal to a network in response to the presence or absence of the information origination authorization.

## Description

The present disclosure relates to the subject matter contained in Japanese Patent Application No. 2004-050550 filed on February 25, 2004, which is incorporated herein by reference in its entirety.

### BACKGROUND OF THE INVENTION

### Field of the Invention

This invention relates to a network conference system, a management server, a conference terminal, and an information origination authorization management method.

### Description of the Related Art

In recent years, using the IP (Internet protocol) technology, a network conference system is used as a multipoint (multi-site) communication tool rather than a simple point-to-point (site-to-site) communication tool.

However, if all conference participants originate information in such a manner that they speak at the same time in the network system connecting multiple points (multiple sites), the communication information amount increases suddenly and there is a high fear of occurrence of a problem of communication band growth and problems of an increase in the load on a server CPU and a voice delay as special processing of merging voice data, etc., to control the band is performed.

One of measures is a method of limiting the number of conference terminals (sites) for enabling the participant to speak to one or two.

A measure not limiting the number of conference terminals (sites) for enabling the participant to speak is a method of arbitration of the chairperson of the conference, as described in JP-A-8-298653.

In the art described in JP-A-8-298653, the terminal of the chairperson holds a speech authorization management table and the person who wants to speak sends a speech authorization acquisition request to the terminal of the chairperson, who then determines whether or not the speech authorization is granted based on the speech authorization management table and sends the determination result from the terminal of the chairperson to the terminal of each participant.

### SUMMARY OF THE INVENTION

In the method of limiting the number of conference terminals (sites) for enabling the participant to speak to one or two according to the related art described above, the users who can actively originate information are fixed from the beginning and therefore lively discussion in which the participants freely speak cannot be realized.

Since the system is lacking in flexibility, if the network conference system has a margin of capacity (namely, there is a margin of the communication band and performance of hardware of the CPU, etc.,), the potentiality of the system cannot sufficiently be exploited and therefore two-way discussion at multiple sites cannot be realized.

In the art described in JP-A-8-298653, the speech opportunity is given to the user (conference participant) at each site as the speech authorization is acquired, but the chairperson always determines whether or not each conference participant can speak, and the procedure for each user to speak is cumbersome and the speech opportunities of the participants may become unbalanced depending on the determination of the chairperson. Therefore, the art (system) is not sufficient from the viewpoint of the system for enabling the participants to have free and lively discussion with each other.

It is one of objects of the invention to enhance the flexibility and the ease-of-use of a multipoint network conference system and enable each conference participant to speak more freely, thereby realizing a lively two-way discussion at multiple sites.

According to a first aspect of the invention, there is provided a network conference system of a server-client type including: a management server being connected to a network; a plurality of conference terminals provided as clients and connected to the management server through the network, wherein the management server includes: a server communication section that communicates with the conference terminals through the network; and an information origination authorization management section that, when a new acquisition request of an information origination authorization is requested by a user having no information origination authorization, causes the conference terminal of one of users having the information origination authorization to return the information origination authorization in accordance with a predetermined interchange algorithm, and gives the information origination authorization to the conference terminal of the user issuing the new acquisition request to limit a maximum number of uses who originate information at a same time to a predetermined number, wherein each of the conference terminals includes: a client communication section that communicates with the management server through the network; and an information origination control section that transfers information concerning the information origination authorization to and from the information origination authorization management section of the management server and controls information origination in response to the presence or absence of the information origination authorization.

According to a second aspect of the invention, there is provided an information origination authorization management method in a server-client network conference system including a management server being provided on a network and a plurality of conference terminals as clients that can use the management server through the network, wherein the management server sets the permissible number of simultaneous speeches for a speech authorization, one information origination authorization, the method including: starting a conference in a state in which the speech authorization is given to as many participants as the number less than the permissible number of simultaneous speeches; transmitting a new acquisition request of the speech authorization from the conference terminal of the participant having no speech authorization to the management server; and dynamically changing the speech authorization while the conference is proceeding as upon reception of the new acquisition request of the speech authorization from the conference terminal, the management server causes the conference terminal of one of the participants having the speech authorization to return the speech authorization in accordance with a predetermined interchange algorithm and gives the speech authorization to the conference terminal of the participant issuing the new acquisition request.

### BRIEF DESCRIPTION OF THE DRAWINGS

The above objects and advantages of the present invention will become more apparent by describing in detail preferred exemplary embodiments thereof with reference to the accompanying drawings, wherein:
FIG. 1 is a block diagram to show the configuration of a network conference system according to an embodiment of the invention;
FIG. 2 is a drawing to describe the operation of the network conference system in FIG. 1 (information transfer between each conference terminal and a management server and the like);
FIG. 3 is a drawing to describe the operation of the management server for determining the user who returns the speech authorization using an FIFO (first-in, first-out) algorithm;
FIGS. 4A and 4B are drawings to describe the operation of the management server for determining the user who returns the speech authorization using an LFU (least-frequently used) algorithm;
FIGS. 5A and 5B are drawings to describe a method of managing the presentation authorization and the speech authorization with the authorizations associated with each other; FIG. 5A shows a state before the presentation authorization is granted and FIG. 5B shows a state after the presentation authorization is granted;
FIGS. 6A and 6B are drawings to describe a method of managing the speech authorization and other information origination authorizations with the authorizations associated with each other; FIG. 6A shows a state before the speech authorization is granted and FIG. 6B shows a state after the speech authorization is granted; and
FIG. 7 is a flowchart to describe a change processing method of various information origination authorizations.

### DETAILED DESCRIPTION OF THE PREFERRED EMBODIMENTS

Referring now to the accompanying drawings, there are shown preferred embodiments of the invention.

### (First embodiment)

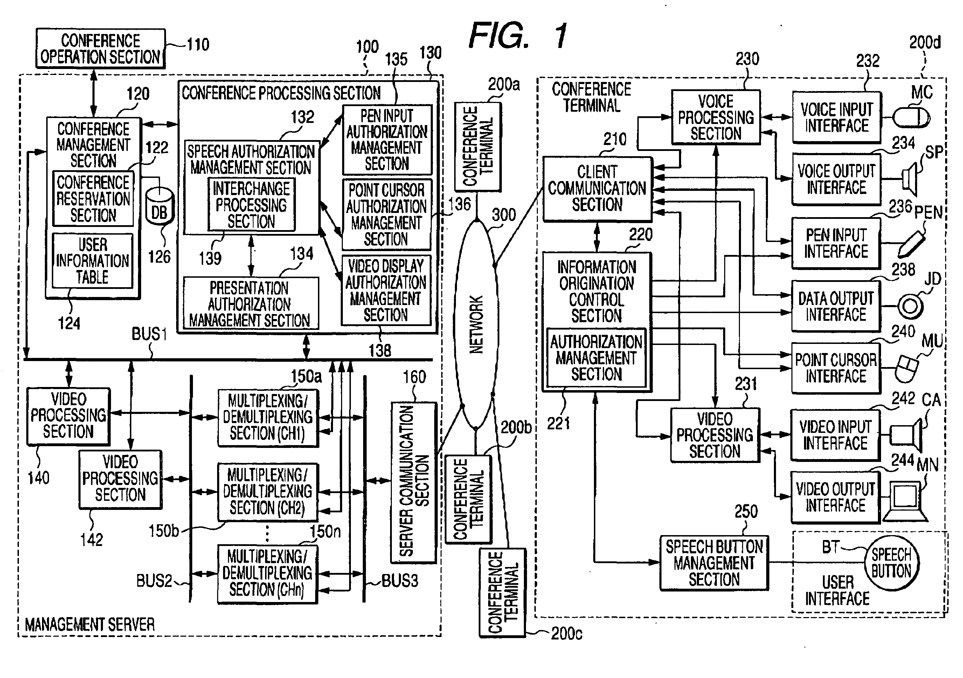

FIG. 1 is a block diagram to show the configuration of a network conference system according to a first embodiment of the invention.

As shown in FIG. 1, the network conference system according to the embodiment of the invention is a server-client system made up of a management server 100 for centralizedly managing information resources and four conference terminals (200a to 200d) as clients using the management server 100, the conference terminals (200a to 200d) and the management server 100 being connected through a network 300.

It is assumed that the network conference system in FIG. 1 permits a maximum of three users to speak at the same time.

If the number of sites connected to the network conference system exceeds the permissible number of simultaneous speeches, dynamic management of the speech authorization, etc., is executed for enabling the participants to perform information origination of speech, etc., from all sites.

### The configuration of the network conference system is as follows:

The management server 100 includes a conference management section 120, a conference processing section 130, a video processing section 140, a voice processing section 142, multiplexing/demultiplexing sections (150a to 150n) for multiplexing/demultiplexing communication channels, and a server communication section 160.

The sections are connected to each other through buses (BUS1 to BUS3) and can transfer communication data and control information.

The conference management section 120 accepts a conference reservation from each conference terminal connected to the network conference system before the conference is held, and manages information of the users who take part in the conference (participants) in a unified manner.

The conference management section 120 includes a conference reservation section 122 and a user information table 124. It can reference a database (DB) 126 whenever necessary.

The manager of the management server can enter necessary information in the conference management section 120 through a conference operation section 110.

The conference processing section 130 is a section for supporting the progress of the conference by performing real-time processing; specifically it executes conference connection processing (containing participant authentication processing), dynamic management of various authorizations (information origination authorizations), and control processing required for conference operation.

The conference processing section 130 includes a speech authorization management section 132 (having an interchange processing section 139), a presentation authorization management section 134, a pen input authorization management section 135, a point cursor authorization management section 136, and a video display authorization management section 138.

The authorization management sections (132 to 138) manage the authorizations for each conference and execute authorization acquisition request processing, authorization return request processing, control of the number of simultaneous speeches, and the like.

The speech authorization is the authorization for the user taking part in the conference to speak, and the presentation authorization is the authorization to make a presentation.

The pen input authorization is the authorization for the user to enter necessary data with an electronic pen from his or her conference terminal in the network conference system wherein the participants can share screens of an electronic board, etc.

The point cursor authorization is the authorization for one participant to display the cursor on the display of his or her conference terminal also on the display of another conference terminal for use as a pointing tool.

For example, if the presenter points to one point of the map displayed on the display with the cursor, the cursor is also displayed at the same position on the display of another conference terminal, pointing to the same map point.

The video display authorization is the authorization to preferentially display the video of the participant having the speech authorization in the network conference system wherein the video (face image, pit, etc.,) of each participant connected to the conference system is displayed on the display of each conference terminal.

The video display authorization is used to hide the video of the participant having no speech authorization, whereby the participant video data is not transmitted or received and therefore the network load can be lessened.

Herein, the authorizations are collectively called "information origination authorization."

That is, the speech authorization is the authorization to originate the speech toward other conference terminals; the presentation authorization is the authorization to originate the presentation toward other conference terminals; the pen input authorization is the authorization to originate the pen input description toward other conference terminals; the point cursor authorization is the authorization to originate the information of the position pointed to by the cursor toward other conference terminals; and the video display authorization is the authorization to originate the video indicating the participant toward other conference terminals; the authorizations are authorizations involved in active origination of information.

If such information origination is permitted without limitation, a sudden increase in the communication data results, causing network congestion, a CPU overload state, etc., to occur and therefore various authorizations are created and are managed by the management server in a unified manner.

The speech authorization is subordinate to the presentation authorization, and the pen input authorization, the point cursor authorization, and the video display authorization are subordinate to the speech authorization (this point is described later specifically in a second embodiment).

The speech authorization management section 132 and the presentation authorization management section 134 in FIG. 1 exchange management information, whereby processing with the speech authorization and the presentation authorization associated with each other is made possible.

The speech authorization management section 132, the pen input authorization management section 135, the point cursor authorization management section 136, and the video display authorization management section 138 exchange management information, whereby processing with the speech authorization, the pen input authorization, the point cursor authorization, and the video display authorization associated with each other is made possible.

The video processing section 140 provided in the management server 100 in FIG. 1 processes video information contained in conference data and the voice processing section 142 processes voice information contained in conference data.

The multiplexing/demultiplexing sections 150a to 150n multiplex/demultiplex channels.

That is, the permissible number of simultaneous speeches being "three" requires that voice data originated by three participants at the same time be able to be multiplexed and transmitted to other conference terminals in real time. It is also necessary to demultiplex the voice information and the video information multiplexed and sent from one conference terminal and process the information separately. Therefore, the multiplexing/demultiplexing sections 150a to 150n are provided.

The server communication section 160 transmits and receives conference data (containing voice information, video information, and various pieces of control information).

The conference terminals 200a to 200d in FIG. 1 have the same configuration. FIG. 1 shows the internal configuration of only the conference terminal 200d.

The conference terminal 200d includes a client communication section 210, an information origination control section 220 (having a authorization management section 221), a voice processing section 230, a video processing section 231, a voice input interface 232, a voice output interface 234, a pen input interface 236 (having a function of converting pen input information by an electronic board function, etc., into data), a data output interface 238 (used to output pen data, etc.,), a point cursor interface 240 (having a function of converting point cursor operation information into data), a video input interface 242, a video output interface 244, and a speech button management section 250 as a user interface for acquiring, renouncing, etc., the speech authorization.

The conference terminal 200d also includes a microphone (MC) and a loudspeaker (SP) as voice input/output means and an electronic pen (PEN), a data output terminal (JD), a mouse (MU), a camera (CA), a display (MN), etc., as information input/output means.

The conference terminal 200d is provided with a speech button (or a speech key, etc.,) BT as a user interface for making an expression of intention to acquire or renounce the speech authorization. As the user interface, a voice input system may be adopted.

The client communication section 210 transmits and receives conference data (containing voice information, video information, and various pieces of control information).

The voice processing section 230 has functions of encoding/decoding voice data and determining that the data is voice data from the sound pressure. The video processing section 231 has functions of encoding video data at the specified site and decoding input video data.

The speech button management section 250 detects a state in which the speech button (BT) is pressed (state in which the user of the conference terminal possesses the speech authorization, etc.,), a state in which the speech button is released (state in which the speech authorization, etc., is returned), the speech button being pressed once (a new acquisition request of the speech authorization, etc., an expression of intention to renounce the speech authorization, etc.,), or the light, and informs the information origination control section 220 of the detected state, etc.

The information origination control section 220 manages acquiring, renouncing, etc., the speech authorization, the presentation authorization, the pen input authorization, the point cursor authorization, and the video display authorization in the conference terminal as the client and controls the client communication section 210, the voice processing section 230, and the video processing section 231 to inhibit information origination in a state in which the user of the conference terminal does not posses any authorization.

The authorization management section 221 of the information origination control section 220 transfers management information (information concerning the authorizations) to and from the conference management section 120 and the conference processing section 130 in the management server 100 for managing the authorizations.

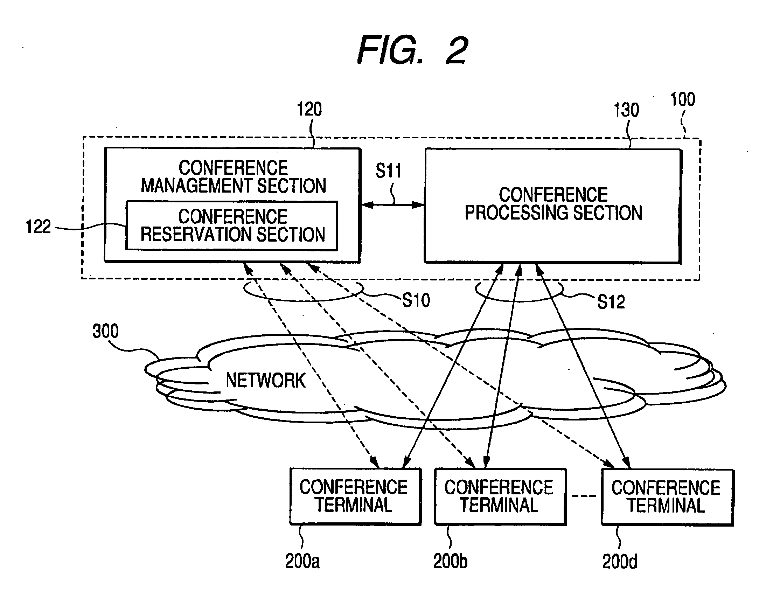

Next, the operation of the network conference system in FIG. 1 will be discussed with reference to FIG. 2.

FIG. 2 is a drawing to describe the operation of the network conference system (information transfer between each conference terminal and the management server and the like).

First, the operation until connection to a conference will be discussed.

The user of each of the conference terminals 200a to 200d attempting to take part in a network conference must make a conference reservation.

Each of the conference terminals 200a to 200d uses a client application of a Web browser to access the conference reservation section 122 of the conference management section 120 provided in the management server 100, and makes a conference reservation (S10 in FIG. 2).

When a conference reservation is made, the conference reservation section 122 distributes an authentication password to each user. At this time, the information origination authorizations such as the speech authorization may be granted to a predetermined user.

Information of the users making a conference reservation, information of the conference promoter, and authentication information are stored in the user information table 124 in FIG. 1.

Upon completion of the conference reservation, the conference reservation section 122 sends the information of the conference promoter and the information of the users connecting to (taking part in) the conference to the conference processing section 130 (S11 in FIG. 2) . If the authorizations such as the speech authorization are granted to a predetermined user at the reservation time, information indicating who possesses the authorizations is also sent to the conference processing section 130.

When the conference start time is reached, each user enters the authentication password distributed at the conference reservation time from the Web browser. Then, the conference client application is started.

Each of the conference terminals 200a to 200d executes predetermined connection operation with the conference processing section 130 of the management server 100.

When each of the conference terminals 200a to 200d connects, the conference processing section 130 authenticates the user based on the password and allows the conference terminal to connect to the conference only if the user is authenticated. Accordingly, the conference terminals 200a to 200d are connected to the scheduled conference.

When the speech authorization, etc., is specified at the reservation time, at least one user (as many users as the permissible number of simultaneous speeches or less) has the speech authorization, etc., in the initial connection state. The conference promoter, who is the first presenter, always has the speech authorization.

In the system in which the speech of the user of each conference terminal is managed with the speech button BT (see FIG. 1), the speech button of the conference terminal of the user having the speech authorization is automatically pressed, enabling the user to speak.

As the conference proceeds, if the participant (user) having no speech authorization wants to speak, he or she presses the speech button BT to acquire the speech authorization.

As the participant having no speech authorization presses the speech button BT, the speech button management section 250 of the conference terminal detects it and informs the information origination control section 220 that the speech button BT is pressed. The information origination control section 220 transmits a new acquisition request of the speech authorization through the client communication section 210 to the management server 100.

The conference processing section 130 of the management server 100 determines whether or not the current number of the users having the speech authorization (=M) is equal to the maximum permissible number of speeches) (=N; in the embodiment, N=3).

If M does not equal N, there is room to assign the speech authorization to another user and therefore the conference processing section 130 grants the speech authorization to the user issuing the new acquisition request of the speech authorization and notifies the conference terminal of the user that the speech authorization is granted to the user.

On the other hand, if M=N, as many speech authorizations as the permissible number are already used. Therefore, processing of purging one user from the group of the users having the speech authorization at present and instead entering the user issuing the new acquisition request of the speech authorization in the group, namely, interchange processing is performed.

The interchange processing section 139 performs the interchange processing.

That is, the interchange processing section 139 determines which user is requested to return the speech authorization in accordance with a predetermined algorithm.

As the predetermined algorithm, either an FIFO (first-in, first-out) algorithm for requesting the participant speaking earliest to return the speech authorization or an LFU (least-frequently used) algorithm for requesting the participant with the largest elapsed time since the last speech to return the speech authorization can be adopted.

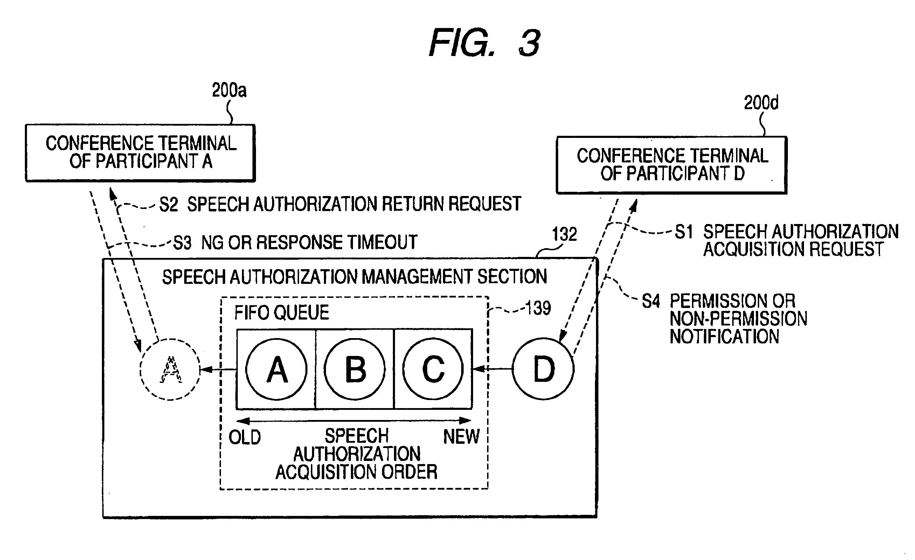

FIG. 3 is a drawing to describe the operation of the management server for determining the user who returns the speech authorization using the FIFO (first-in, first-out) algorithm.

In FIG. 3, a participant D having no speech authorization presses the speech button BT of the conference terminal 200d for issuing a new acquisition request of the speech authorization (S1).

The interchange processing section 139 in the speech authorization management section 132 contains an FIFO queue as the speech authorization management data, and a participant A speaking earliest is requested to return the speech authorization.

The speech authorization management section 132 sends a speech authorization return request to the conference terminal 200a of the participant A (S2).

The speech authorization management section 132 detects whether or not the conference terminal 200a of the participant A makes a response within a predetermined time period (S3) and notifies the conference terminal of the participant D that speech is permitted or not permitted (change or no change in the speech authorization) based on the detection result (S4).

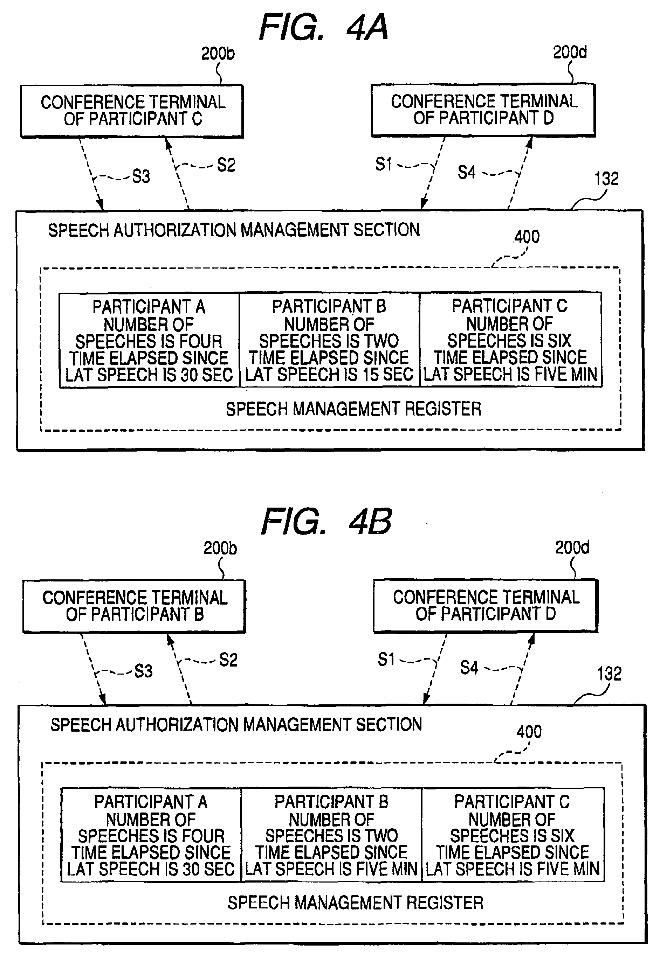

FIGS. 4A and 4B are drawings to describe the operation of the management server for determining the user who returns the speech authorization using the LFU (least-frequently used) algorithm. FIGS. 4A and 4B give two examples different in the value of a speech management register 400 and each shows which participant returns the speech authorization.

As shown in FIGS. 4A and 4B, the interchange processing section 139 of the speech authorization management section 132 has the speech management register 400 (not shown in FIG. 1).

When the participant D having no speech authorization presses the speech button BT of the conference terminal 200d for issuing a new acquisition request of the speech authorization (S1), the interchange processing section 139 references the speech management register 400.

The speech management register 400 records the elapsed time since the last speech and the number of speeches for each of all participants A, B, and C other than the participant D pressing the speech button BT.

In the example in FIG. 4A, the participant A has made four speeches and the time elapsed since the last speech is 30 seconds. The participant B has made two speeches and the time elapsed since the last speech is 15 seconds. The participant C has made six speeches and the time elapsed since the last speech is five minutes.

In this case, the participant C with the longest elapsed time since the last speech is requested to return the speech authorization.

In the example in FIG. 4B, the participant A has made four speeches and the time elapsed since the last speech is 30 seconds. The participant B has made two speeches and the time elapsed since the last speech is five minutes. The participant C has made six speeches and the time elapsed since the last speech is five minutes.

In this case, the participants with the longest elapsed time since the last speech are B and C and the elapsed time is five minutes. If the participants thus have the same elapsed time since the last speech, the participant B or C, whichever is the smaller in the number of speeches, namely, the participant B is requested to return the speech authorization.

The counting method of the number of speeches of each participant may be defined appropriate in such a manner that
(1) if the speech volume exceeds simply a predetermined sound level, the count is incremented by one (speech); or
(2) if the speech volume continues to exceed a first sound level for a predetermined time or more and then continues to fall below a second sound level for a predetermined time or more, the count is incremented by one (speech).

With the count method in (1), it is feared that the count may be incremented by one as the participant makes an agreeable response such as "yes," for example, and therefore it is desirable that the count method as in (2) should be adopted.

The speech authorization management section 132 sends a speech authorization return request to the conference terminal 200b of the participant B (or C) (S2) . The speech authorization management section 132 detects whether or not the conference terminal 200b of the participant B (or C) makes a response within a predetermined time period (S3) and notifies the conference terminal of the participant D that speech is permitted or not permitted (change or no change in the speech authorization) based on the detection result (S4).

Dynamic change of the speech authorization is thus executed while the conference is proceeding.

Accordingly, speech is made possible from any site in the multipoint connection network conference system and a flexible system is provided.

Dynamic change of not only the speech authorization, but also any other authorization such as the pen input authorization can be executed.

The participant having the speech authorization can also renounce the speech authorization voluntarily in the middle of the conference.

In this case, the user who wants to renounce the speech authorization again presses the speech button BT of the conference terminal.

As the participant having the speech authorization presses the speech button BT, the speech button management section 250 of the conference terminal detects it and informs the information origination control section 220 that the speech button BT is pressed. The information origination control section 220 transmits a new acquisition request of the speech authorization through the client communication section 210 to the management server 100.

To renounce the speech authorization, a speech authorization renouncing button may be additionally provided and pressed in addition to the manner in which the speech button BT of the conference terminal is again pressed as described above.

In the conference processing section 130 of the management server 100, the speech authorization management section 132 detects the speech authorization renouncement request from the participant having the speech authorization and cancels the speech authorization of the participant.

As the speech authorization is thus renounced voluntarily, a speech opportunity can be given to any other user (or the speech authorization can be granted to a predetermined user).

The most of the functions of the network conference system of the embodiment is made, whereby a free conference with a sense of realism is realized. The network conference system of the embodiment is highly versatile and flexible and various modifications and applications of the network conference system are possible.

For example, who has the speech authorization at the conference start time varies depending on how the speech authorization is given.

The presenter always has the speech authorization as described above. It is also possible to specify the participant who can acquire the speech authorization when a conference reservation is made.

It is also possible to specify the participant who always has the speech authorization when a conference reservation is made. At the conference connection time, only the promoter (first presenter) may have the speech authorization and other participa'nts may have no speech authorization until pressing the speech button.

It is also possible to specify the permissible number of simultaneous speeches when a conference reservation is made.

The number of simultaneous speeches per conference may be set as the setting of the conference system rather than when a conference reservation is made. However, the number of simultaneous speeches needs to be limited on the system performance and the maximum number of simultaneous speeches needs to be set as the system.

If the participant A presses the speech button, it is also possible to inquire of the presenter whether or not the participant A may speak and to permit/not permit the participant A to speak by authorization of the presenter.

As the speech authorization acquisition method, the promoter can also give the speech authorization to the participant regardless of whether or not the speech button is pressed.

As the speech authorization acquisition method, it is also possible to use voice input detection regardless of whether or not the speech button is pressed. That is, if the participant having no speech authorization produces voice for a given time at a volume level exceeding a threshold value, it is assumed to be a new acquisition request of the speech authorization as the speech button is pressed.

In each conference terminal, it is also possible to use a specific application rather than the Web browser in the user interface for making a conference reservation, conference connection, etc.

### (Second embodiment)

In a second embodiment of the invention, the subordinate relationships among the authorizations and conjunction processing using the subordinate relationships will be discussed.

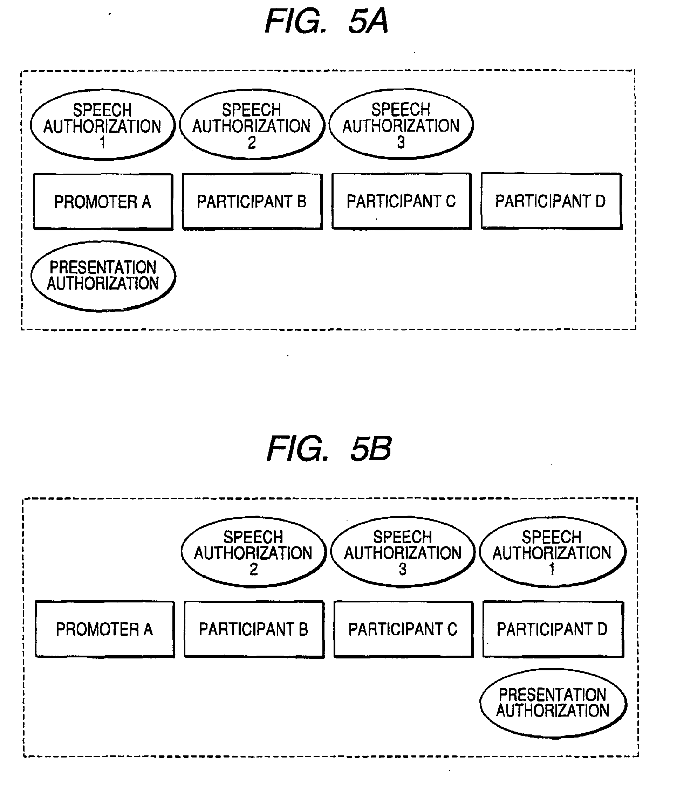

FIGS. 5A and 5B are drawings to describe a method of managing the presentation authorization and the speech authorization with the authorizations associated with each other; FIG. 5A shows a state before the presentation authorization is granted and FIG. 5B shows a state after the presentation authorization is granted.

The participant can acquire the presentation authorization to make a presentation of the conference. The speech authorization is subordinate to the presentation authorization and therefore the presenter always has the speech authorization.

Assume that the promoter A grants the presentation authorization to the participant D in a state in which the promoter A has the presentation authorization and speech authorization 1, as shown in FIG. 5A. Then, speech authorization 1 is also changed automatically to the participant D (new presenter), as shown in FIG. 5B.

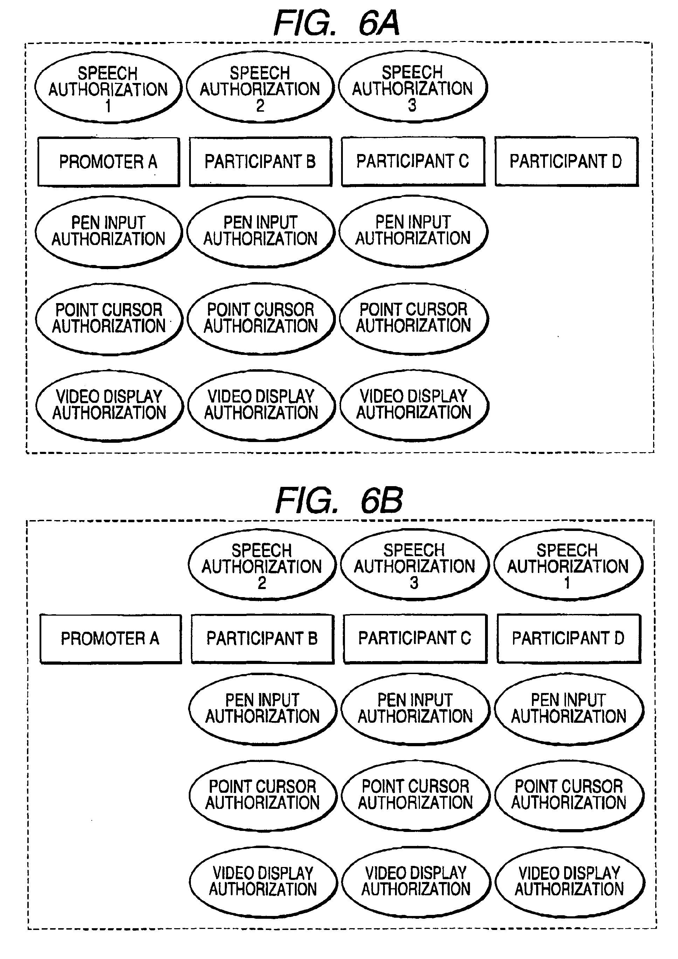

FIGS. 6A and 6B are drawings to describe a method of managing the speech authorization and other information origination authorizations with the authorizations associated with each other; FIG. 6A shows a state before the speech authorization is granted and FIG. 6B shows a state after the speech authorization is granted.

The pen input authorization, the point cursor authorization, and the video display authorization are subordinated to the speech authorization.

Assume that the promoter A grants speech authorization 1 to the participant D in a state in which the promoter A has the pen input authorization, the point cursor authorization, and the video display authorization as well as speech authorization 1, as shown in FIG. 6A. Then, the pen input authorization, the point cursor authorization, and the video display authorization are also changed automatically to the participant D (new speech authorization user), as shown in FIG. 6B.

The various authorizations (such as the pen input authorization) are subordinated to the speech authorization and processing about the various authorizations (such as the pen input authorization) is performed in conjunction with processing of the speech authorization, whereby management of the authorizations is facilitated.

If the participants hold the various authorizations separately and all participants exercise their held authorizations to execute information origination all at once, the network load, the client computer load, and the management server load become heavy rapidly.

Such a situation can be made hard to occur as the various authorizations are subordinated to the speech authorization.

### (Third embodiment)

In a third embodiment of the invention, a dynamic management method of various authorizations (a method of change processing of various authorizations executed by conference processing section 130) will be discussed.

The presenter always has the speech authorization and various authorizations (pen input authorization, point cursor authorization, and video display authorization) are subordinate to the speech authorization, as described above.

The speech authorization can be newly acquired as operation of pressing a speech button, etc., is performed, and the speech authorization can also be renounced voluntarily.

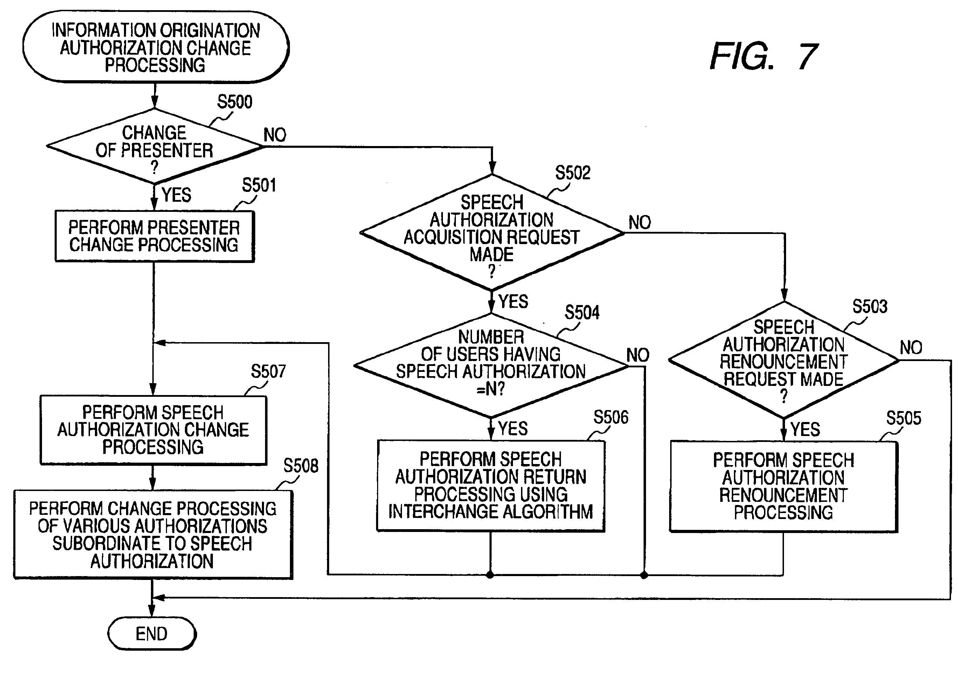

FIG. 7 is a flowchart to describe a change processing method of various information origination authorizations.

To begin with, whether or not there is a change of the presenter is detected (S500). If there is a change, presenter change processing is executed (S501) and subsequently the speech authorization subordinate to the presentation authorization is also changed (S507) and subsequently change processing is also performed for the various authorizations such as the pen input authorization subordinate to the speech authorization.

If there is no change of the presentation authorization at S500, when the participant having no speech authorization makes a new acquisition request of the speech authorization (S502), whether or not the number of the users having the speech authorization is equal to the permissible number of simultaneous speeches, N, is determined (S504).

If they do not equal, it means that the speech authorization can be granted and therefore speech authorization change processing is executed to give the speech authorization to the user issuing the new acquisition request (S507).

If the number of the users having the speech authorization is equal to the permissible number of simultaneous speeches, N, at S504, it means that every speech authorization is used and therefore processing of requesting one of the users having the speech authorization at present to return the speech authorization is executed (S506) .

That is, speech authorization return processing using an interchange algorithm is executed (S506). Then, S507 and S508 are executed.

If there is no change of the presentation authorization, when one of the users having the speech authorization makes a speech authorization renouncement request (S503), speech authorization renouncement processing is executed (S505).

To give the renounced speech authorization to another user, speech authorization change processing is executed (S507) and change processing of the various authorizations subordinate to the speech authorization is executed (S508).

Thus, it is made possible to dynamically change the information origination authorizations such as the speech authorization, whereby it is made possible to speak, etc., from every site and moreover the speech authorization is renounced and granted at the appropriate timings, whereby the conference can be advanced smoothly.

Therefore, it is made possible to make a natural and lively two-way discussion.

As described above, the network conference system of each embodiment described above includes the management server being provided on the network and the plurality of conference terminals as clients that can use the management server through the network, wherein only the conference terminals given an information origination authorization are allowed to originate information, whereby the maximum number of users who originate information at the same time is limited to a predetermined number and the management server can dynamically give the information origination authorization to the plurality of conference terminals, wherein the management server includes a server communication section; and an information origination authorization management section, when a participant having no information origination authorization makes a new acquisition request of the information origination authorization, for causing the conference terminal of one of the users having the information origination authorization to return the information origination authorization in accordance with a predetermined interchange algorithm and giving the information origination authorization to the conference terminal of the participant issuing the new acquisition request, and wherein each of the plurality of conference terminals includes a client communication section; and an information origination control section for transferring information concerning the information origination authorization to and from the information origination authorization management section of the management server and controlling information origination in response to the presence or absence of the information origination authorization.

In the network conference system in which simultaneous speech with multipoint connection and at multiple sites is permitted, the information origination authorization is managed in real time and dynamically, whereby full use of the performance of the network conference system is always made and free speech, etc., at each site is made possible while network congestion and system overload are prevented. Therefore, a natural and lively two-way discussion with a sense of realism is realized.

For example, the user who wants information origination of speech, etc., can issue a new acquisition request of the information origination authorization to the management server by operating the user interface, etc. , to acquire the information origination authorization and therefore an opportunity to actively take part in a conference is provided. An easy-to-use system is realized for the users taking part in the conference.

The information origination authorization can also be renounced voluntarily. Using the function, the conference participants can also grant the information origination authorization intentionally to each other, making it possible to advance the conference smoothly. As the participants make the most of the function in the conference, the conference can be advanced as if all gathered together under one roof.

The network conference system of each embodiment described above is rich in flexibility and thus can flexibly cope with change in the communication environment, variation of the number of the sites, etc. For example, the permissible number of simultaneous speeches is set appropriately in response to the network environment (communication band), whereby it is made possible to make the most of the actual communication environment. When the number of the sites is increased or decreased, the most appropriate number of simultaneous speeches is set in view of the communication environment, whereby the performance of the system can be sufficiently exploited.

To change the information origination authorization, an appropriate interchange algorithm is used or the subordinate relationship is provided between one authorization and another authorization and authorization change processing is performed in conjunction, whereby speedy processing, lessening of the processing burden, facilitating of management of the authorizations, etc., can also be accomplished.

The network conference system with multipoint connection promises to increase in the number of sites and the system of the invention can also deal with an increase in the number of sites flexibly.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. A network conference system of a server-client type comprising:
a management server being connected to a network;
a plurality of conference terminals provided as clients and connected to the management server through the network,
wherein the management server includes:
a server communication section that communicates with the conference terminals through the network; and
an information origination authorization management section that, when a new acquisition request of an information origination authorization is requested by a user having no information origination authorization, causes the conference terminal of one of users having the information origination authorization to return the information origination authorization in accordance with a predetermined interchange algorithm, and gives the information origination authorization to the conference terminal of the user issuing the new acquisition request to limit a maximum number of uses who originate information at a same time to a predetermined number,
wherein each of the conference terminals includes:
a client communication section that communicates with the management server through the network; and
an information origination control section that transfers information concerning the information origination authorization to and from the information origination authorization management section of the management server and controls information origination in response to the presence or absence of the information origination authorization.

2. The network conference system as claimed in claim 7.,
wherein the information origination authorization contains a speech authorization, and
wherein when the conference terminal of a participant having no speech authorization makes the new acquisition request of the speech authorization while a conference is proceeding, the information origination authorization management section causes the conference terminal of one of the participants having the speech authorization to return the speech authorization in accordance with the interchange algorithm and gives the speech authorization to the conference terminal of the participant issuing the new acquisition request.

3. The network conference system as claimed in claim 2,
wherein each of the plurality of conference terminals is provided with a user interface section for the participant to send the new acquisition request of the speech authorization and a voluntary renouncement request of the speech authorization to the management server, and
wherein as the participant having no speech authorization operates the user interface section, the new acquisition request of the speech authorization is transmitted to the management server and as the participant having the speech authorization operates the user interface section, a voluntary renouncement request of the speech authorization is transmitted to the management server.

4. The network conference system as claimed in claim 1,
wherein the interchange algorithm is at least either one of an FIFO (first-in, first-out) algorithm for requesting the participant earliest originating information or speaking to return the information origination authorization or the speech authorization, and an LFU (least-frequently used) algorithm for requesting the participant least originating information or speaking to return the information origination authorization or the speech authorization.

5. The network conference system as claimed in claim 1,
wherein the information origination authorization contains a presentation authorization of making a presentation as well as the speech authorization and the speech authorization is subordinate to the presentation authorization, whereby the user having the presentation authorization always has the speech authorization, and
wherein when the presentation authorization is changed from one participant to another participant, the speech authorization is also changed automatically accompanying the presentation authorization.

6. The network conference system as claimed in claim 1,
wherein the information origination authorization contains at least one of a pen input authorization, a point cursor authorization, an application operation authorization, and a video display authorization as well as the speech authorization,
wherein the pen input authorization, the point cursor authorization, the video display authorization, and the application operation authorization are subordinate to the speech authorization, and
wherein when the speech authorization is changed from one participant to another participant, the pen input authorization, the point cursor authorization, the application operation authorization, and the video display authorization are also changed automatically accompanying the speech authorization.

7. A management server comprising the server communication section and the information origination authorization management section, used with the network conference system as claimed in claim 1.

8. A conference terminal comprising the client communication section and the information origination control section, used with the network conference system as claimed in claim 1.

9. A conference terminal comprising the user interface section, used with the network conference system as claimed in claim 3.

10. An information origination authorization management method in a server-client network conference system including a management server being provided on a network and a plurality of conference terminals as clients that can use the management server through the network, wherein the management server sets the permissible number of simultaneous speeches for a speech authorization, one information origination authorization, the method comprising:
starting a conference in a state in which the speech authorization is given to as many participants as the number less than the permissible number of simultaneous speeches;
transmitting a new acquisition request of the speech authorization from the conference terminal of the participant having no speech authorization to the management server; and
dynamically changing the speech authorization while the conference is proceeding as upon reception of the new acquisition request of the speech authorization from the conference terminal, the management server causes the conference terminal of one of the participants having the speech authorization to return the speech authorization in accordance with a predetermined interchange algorithm and gives the speech authorization to the conference terminal of the participant issuing the new acquisition request.

11. The information origination authorization management method as claimed in claim 10, wherein the speech authorization is subordinated to a presentation authorization, one information origination authorization, and the participant having the presentation authorization always has the speech authorization, and
wherein the method further comprises determining the participant caused to return the speech authorization by the management server in accordance with the predetermined interchange algorithm from among the participants other than the participant having the presentation authorization.

12. The information origination authorization management method as claimed in claim 10, wherein a speech authorization return request is transmitted from the conference terminal of the participant having the speech authorization to the management server, whereby the participant having the speech authorization renounces the speech authorization.

13. The information origination authorization management method as claimed in claim 10, wherein the information origination authorization contains at least one of a pen input authorization, a point cursor authorization, an application operation authorization, and a video display authorization as well as the speech authorization, the pen input authorization, the point cursor authorization, the application operation authorization, and the video display authorization are subordinated to the speech authorization, and accordingly when the speech authorization is dynamically changed while the conference is proceeding, the management server also changes the pen input authorization, the point cursor authorization, the application operation authorization, and the video display authorization accompanying the speech authorization.
